(19) Europäisches Patentamt
European Patent Office
Office européen des brevets

(11) **EP 3 839 254 B1**

(12) **EUROPEAN PATENT SPECIFICATION**

(45) Date of publication and mention
of the grant of the patent:
**09.10.2024 Bulletin 2024/41**

(21) Application number: **19849319.9**

(22) Date of filing: **16.08.2019**

(51) International Patent Classification (IPC):
**F03G 7/10** *(2006.01)*        **F03B 17/00** *(2006.01)*

(52) Cooperative Patent Classification (CPC):
**F03G 7/104; F03B 17/00**

(86) International application number:
**PCT/ES2019/070568**

(87) International publication number:
**WO 2020/035631 (20.02.2020 Gazette 2020/08)**

(54) **PRESSURE-BASED DYNAMIC GENERATOR**

DRUCKBASIERTER DYNAMISCHER GENERATOR

GÉNÉRATEUR DYNAMIQUE À PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2018 ES 201830834**

(43) Date of publication of application:
**23.06.2021 Bulletin 2021/25**

(73) Proprietor: **Calvo Merida, Zacarias
29009 Malaga (ES)**

(72) Inventor: **Calvo Merida, Zacarias
29009 Malaga (ES)**

(74) Representative: **Urizar Anasagasti, Jesus Maria et
al
IPAMARK, S.L.
C/ Segre 27- 1°
28002 Madrid (ES)**

(56) References cited:
**EP-A1- 2 767 707        WO-A1-2017/072555
CN-A- 106 286 160        ES-A1- 2 635 613
GB-A- 320 313            GB-A- 328 367
JP-A- 2002 039 052        JP-A- 2011 085 131**

**Description**

**TECHNICAL FIELD**

The pressure-based dynamic generator is a device pertaining to the renewable energy assembly. Therefore, it does not pollute the environment with gas emissions and nor does it consume limited resources as fuel. The system utilizes the pressure to which a fluid contained between a fixed part and a movable part is subjected, and provides an angular velocity thereto as a result of the design of the generator, creating a drive torque on the shaft.

**BACKGROUND OF THE INVENTION**

The generation of a drive torque on a shaft as a result of the movement of a fluid has traditionally been achieved through hydraulic turbines. Hydraulic turbines are divided into action turbines, in which the speed of the fluid is utilized to achieve the movement of the propeller, and reaction turbines that utilize the pressure difference in the blades to achieve movement. However, all of these turbines use the potential difference to perform movement. Recently, the gravitational motor, as an invention, generates movement with toric semi-pistons which generate movement inside a toric casing, therefore having gaskets in the direction of advancement, which causes it to have greater pressure losses due to liquid loss.

The pressure-based dynamic generator solves the problems of the aforementioned devices since it does not make a potential difference and does not have sealing gaskets in the direction of advancement of the angular movement. This increases the number of cycles that can be performed without having to restart the system. Since a single movable part drives the rest of the systems, by making the systems integral therewith, the generated drive torque is substantially increased, and therefore increasing productivity.

Earlier inventions show a remarkable constructive facility, which makes the industrial production thereof viable, avoiding constructive gaskets that would cause significant production losses, and preventing a considerable saving in execution and pressure losses as a result of material dilation.

The hydraulic jack is another earlier invention using the same physical principles as the pressure-based dynamic generator, as it introduces a force in a conduit filled with a liquid that is transformed into pressure and this force entering the device in one direction, exiting in another direction different from the initial direction, according to a surface placed at the other end of the device, generating a movement as a result of the difference of the mobilized surfaces, and therefore of the applied force and the resultant force, the same principle of Pascal's law being that which is applied in the sealed chambers of the generator to produce movement. Furthermore, another device which transforms a vertical weight into pressure on a liquid is disclosed in GB 320 313 A.

In order to generate movement in a stable manner, the device, as an innovation, is kept horizontal, preventing excessive friction, due to the counterweights that are supported on the movable cover to keep it with a flat movement. Preventing excessive friction and unnecessary clearances due to the continuous effect of pressure. The different weights and counterweights which can be used to generate different pressure conditions and to balance the increases and differences in speed and work of the cover with its movable elements.

**DESCRIPTION OF THE INVENTION**

The pressure-based dynamic generator produces a drive torque on a shaft by subjecting a liquid to pressure. The liquid transforms a constant vertical force, such as the weight caused by the gravitational field, into a horizontal force through a pressurized system. The pressure generated on the liquid is transmitted in all the directions of the contour of the chamber containing same, however, the static tank prevents most movements in specific directions of the space, particularly vertical and downwards movement, thereby gathering part of the force caused by the pressure. However, the movable cover allows the rotation about the main shaft of the liquid contained in the chamber and the cover which it drives during its movement. This means that the pressure exerted by the weight causes an angular movement of the movable part, and therefore an angular velocity about a shaft of the weight transmitting system, without generating a potential difference.

The generator has a mechanism for loading and unloading weight with respect to the weight transmitter support. This mechanism allows controlling the amount of weight that actually exerts pressure on the device, whereby the speed and the generated torque can be regulated. The weight that is actually applied on the transmitter support is the one that generates a vertical force on the lateral compressors. The weight transmitter support and the lateral compressors must be integral with one another, such that when the side compressors move, they drive the weight transmitter support therewith, and therefore the attachment of said parts must have the structural strength to allow such joint movement. The lateral compressor is a part that fits vertically into the static tank, in the admission grooves of the compressor. These grooves are vertical and fit perfectly to the compressor, this is completed with sealing gaskets that prevent liquid loss at said point. The compressor can therefore slide vertically inside the grooves of the movable cover, such that the weight of the cover in no time rests on the cover. Rather, it rests solely and exclusively on the liquid to which it transmits the pressure caused by the force of gravity.

The fit between the movable part or cover and the static part or tank is a surface of revolution about the rotation shaft, which means that the cover can rotate inside the tank freely without anything hindering it, and at the same time keep the liquid sealed between the tank and the cover as a result of the sealing gaskets between the cover and the tank. There are several sealed chambers or compartments between the cover and the tank which are filled with an incompressible fluid, and the lateral side compressor rests completely on this liquid. Transmitting the weight to the fluid exclusively. The system has three parts moving independently of one another other. A static tank, a movable cover, and a liquid compression system.

The sealed chambers are compartments between the movable part and the static part of the device. They are sealed, liquid-filled compartments that can become pressurized under the effect of the lateral compressors. Their contact surface between the movable cover and the static tank is a surface of revolution allowing movement about the 360° axis of revolution solely and exclusively in this manner. This is because movements of the movable part in any other direction other than the rotational direction about the axis are not allowed in the sealed chambers. The chambers are furthermore defined by ribs pertaining to the movable part of the device and dividing the volume by way of spokes in a wheel. The ribs are vertical and radial according to the rotational shaft and one of the faces is in full contact with the liquid, while the opposite face is in contact with the lateral compressor, such that there is no contact with the liquid on that surface. The compressor, on its face opposite the rotation, and the rib are in close contact, such that the fluid cannot penetrate or exert pressure between these two components. The face of the compressor in contact with the liquid in the direction of advancement rests exclusively on the liquid, the lower face from the groove is inclined towards the rib against which it slides vertically. This face of the compressor in contact with the liquid has thickness decreasing to the rib, without ever resting on the static bottom tank or on the rib, only on the liquid. This inclination must have a geometric component in the horizontal direction of advancement, i.e., radial in the direction of rotation, such that if the pressure on the different faces of the rib is evaluated in the chamber, it can be observed that on the face in contact with the compressor the rib does not receive as much pressure from the liquid as on the free face, i.e., the face opposite the friction of the compressor, where the rib is in completely contact with the fluid. Therefore, there is a higher pressure on the face of the rib of the cover in said direction of rotation.

The fluid is under pressure inside the chamber, which is a space between a movable part and a fixed part. According to Pascal's law, the pressure is distributed equally according to all the faces of the space it occupies and always perpendicular to the outer contour. Since there is arranged inside this chamber an object that introduces pressure due to the vertical weight it supports, the face of this object or the lateral compressor will exert pressure on the liquid or incoming pressure, while the rest of the faces will have an outgoing pressure or pressure in the direction of liquid expansion, i.e., the direction of expansion of the liquid on the walls. As the contact face between the compressor and the rib is vertical and has no fluid, pressure is not transmitted by the liquid, only the other face of the compressor generates incoming pressure on the fluid and with a horizontal component which is in accordance with the geometry of the solid but which, in the liquid, is perpendicular thereto.

If the pressure is broken down by directions. According to the lower face, the tank itself compensates for the vertical force as it is a static part and it is also counteracted by the tank itself in its outer contour. The vertical upward movement of the cover is counteracted by the counterweight system which prevents the movement, keeping it horizontal. Due to its geometry, the movable cover can only perform one movement that is not prevented by the static tank or the counterweights, i.e., rotation about its axis of revolution of the contact with the cover. Without unloading weight on the compressors and by way of verification that the system works, if a horizontal force is applied on the cover in the direction of rotation, the cover would rotate about its own shaft, so with that horizontal force generated by the weight, the movable system rotates with respect to the static one.

If the system of forces on the walls on which the liquid exerts pressure is evaluated. In each fluid-filled sealed chamber and on the same faces of the ribs with the same direction of rotation, there will be a higher pressure than on the face opposite the rotation. The evaluation of the forces exerted by the pressure on a rib explains the reason for the rotation of the cover. The rib is radial to the rotation shaft and the compressor slides vertically on one of the faces or on the face opposite the advancement, since the face of the rib is vertical. Therefore, the liquid will exert no pressure at all on the rib on the entire contact surface, in fact it is an incoming pressure in the fluid on which the lateral compressor rests. However, on the opposite face the entire surface is in contact with the liquid. The force F applied on that face can be defined as $F = P*S$, where P is the pressure and S the surface. So, the force on the contact face with the compressor $F_c$ and the force on the free face will be $F_l$ and they will fulfill the inequality $F_c < F_l$, as the pressure is equal but the surfaces on which the pressure is exerted are smaller on the contact face than on the free face of the rib.

If Bernoulli's equation is applied to the fluid contained in a chamber since the fluid is incompressible and subjected to pressure without potential difference, it will be observed that the term of the potential difference disappears from the equation as it is zero, while the pressure in the direction of rotation proceeds to provide a speed to the liquid as this alone can counteract the pressure in the direction of rotation, if frictional losses are taken into account, it is observed that the pressure in the ribs in the direction of rotation is transformed into the speed of the fluid, and the rotation of the movable cover that it drives therewith. The Bernoulli's equation is as follows:

$$\frac{V_1^2}{2*g} + \frac{P_1}{\gamma} + Z_1 = h_f + \frac{W}{g} + \frac{V_2^2}{2*g} + \frac{P_2}{\gamma} + Z_2$$

Where the terms:

    V= Speed
    P= Pressure
    Z= height (potential difference).
    $h_f$= Frictional loss.
    y= Specific gravity
    g= Gravitational acceleration
    W= external work extracted from the fluid.

If $Z_1=Z_2$ for an unbalanced initial pressure $P_1$ on both faces of a rib and $V_1$=0. To obtain a compensated pressure P2, the fluid would have to develop a V2, compensate for frictional losses, and could generate a work provided that the initial pressure was sufficient. The situation being similar to Bernoulli's tapering in a tube, where higher speed is achieved at lower pressure for one and the same liquid stream, provided that the contour is modified such that it tapers off.

The pressure of the fluid in the static part and its adhesion thereto causes the reaction on the part of the tank necessary for the movement according to Newton's third law. Unlike a solid, liquid deforms as it advances, and due to that reason and to the fact that adhesion generates a boundary layer at the contact between the tank and the liquid, it causes within same a pseudo-elliptical particle movement in the chamber, and therefore pushes the cover. The device complies with the principle of energy conservation, which states that energy is neither created nor destroyed in an isolated system, only transformed, and it complies same because the system is not isolated, but is continuously and permanently receiving a weight on the device that is transformed into pressure, and in turn this pressure does not drop as speed increases, but is continuously fed by the weight, allowing it to rotate while the pressure supply persists.

The device is not a perpetual or continuous movement, but rather pressure and frictional losses cause the degradation of the characteristics of the system, and therefore the sealing and pressure within the chambers. Therefore, after a certain working period, the system has to be reassembled with the same working characteristics in order for it work again. The sum of the chambers around the shaft generates a total force which is transformed into angular velocity of rotation.

The weight does not make a potential difference due to the incompressibility of the liquid, but since rotation about the shaft of the movable cover is allowed, it acquires angular velocity about the rotation shaft and that angular velocity generates the drive torque. Since the movable cover is divided into sectors, it prevents fluid loss during movement since the differential fluid losses will pass to the adjacent chambers and so on and so forth. Contrary to the rotation caused in isolated chambers where any fluid loss does not remain in the pressurized system.

In order to keep the movable system horizontal and to allow rotation about the shaft, the system has a static tank which receives the downward pressure of the fluid in the centrifugal direction. It is verified that the cover receives forces according to the directions of rotation which are allowed and which are the vertical and upward direction of rotation of the cover about the shaft, for which the generator requires a counterweight system resting directly on the cover to counteract this vertical force and keep rotation horizontal, and reducing the bending and shearing moments which deform the system.

## BRIEF DESCRIPTION OF THE DRAWINGS

To complement the description provided herein, and for the purpose of helping to make the features of the invention more readily understandable, said description is accompanied by a set of drawings constituting an integral part of the same, which by way of illustration and not limitation represents the following:

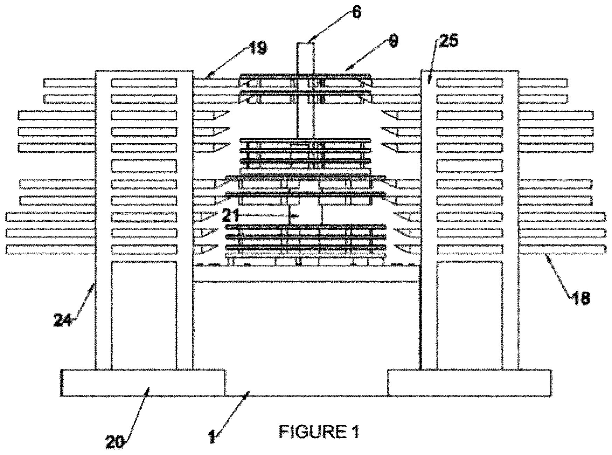

    Figure 1.- shows a front view of the pressure-based dynamic generator.

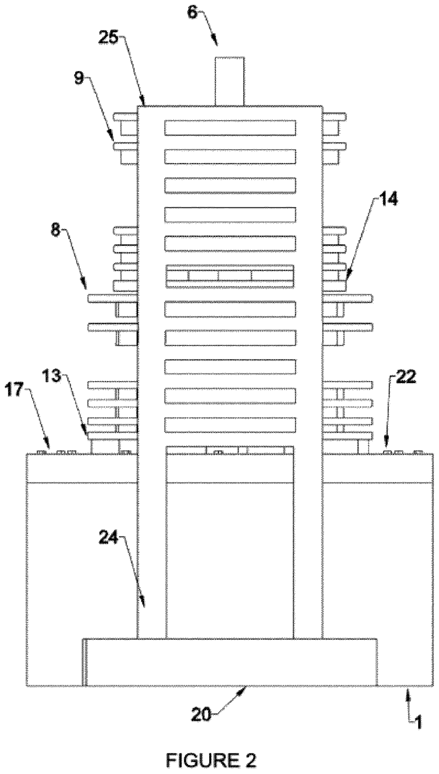

    Figure 2.- shows a side view of the pressure-based dynamic generator.

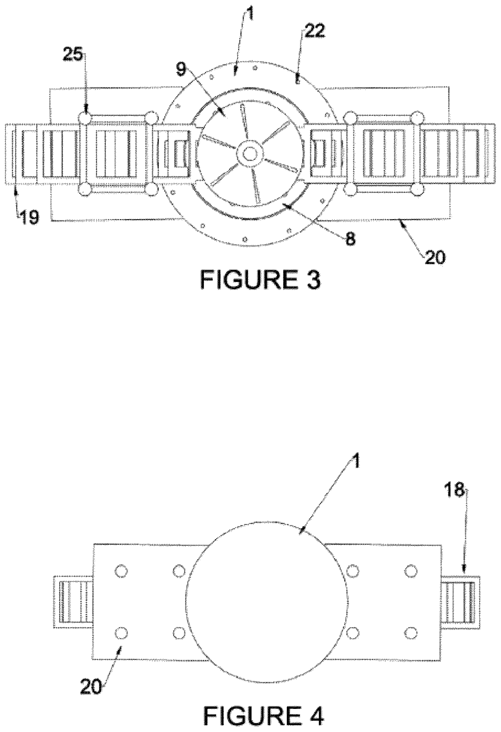

    Figure 3.- top view of the pressure-based dynamic generator.
    Figure 4.- bottom view of the pressure-based dynamic generator.

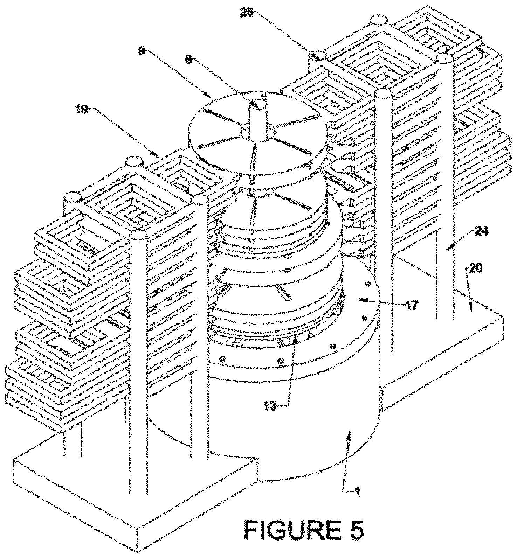

    Figure 5.- isometric view of the pressure-based dynamic generator.

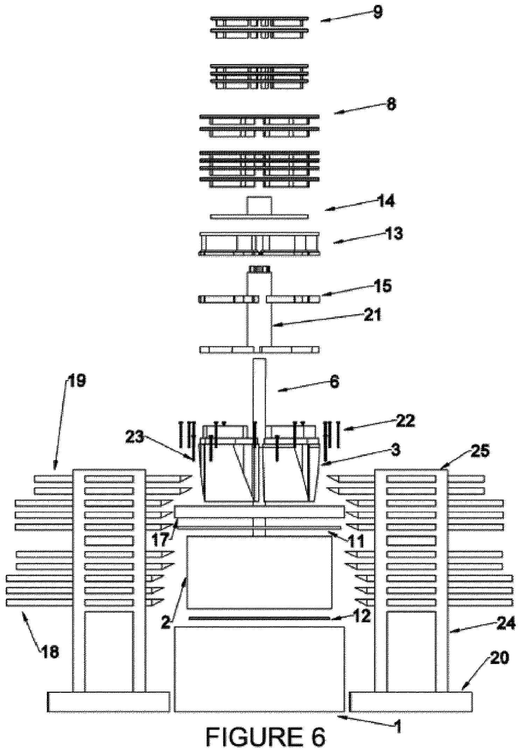

    Figure 6.- exploded front view of the pressure-based dynamic generator.

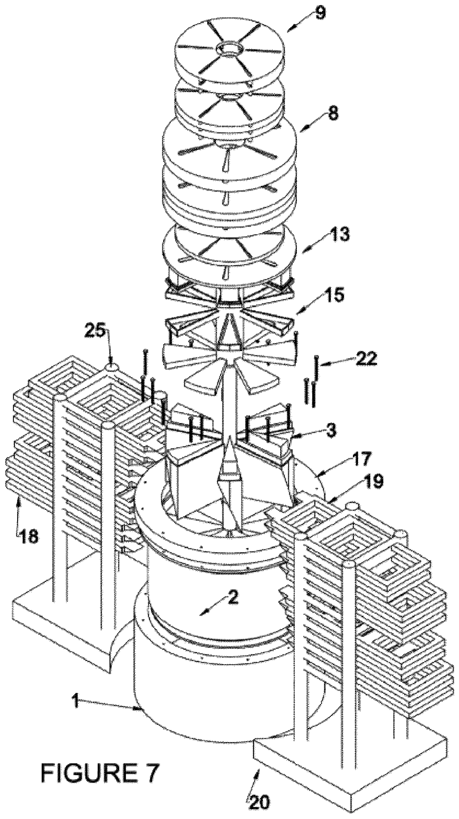

    Figure 7.- exploded isometric view of the pressure-based dynamic generator.

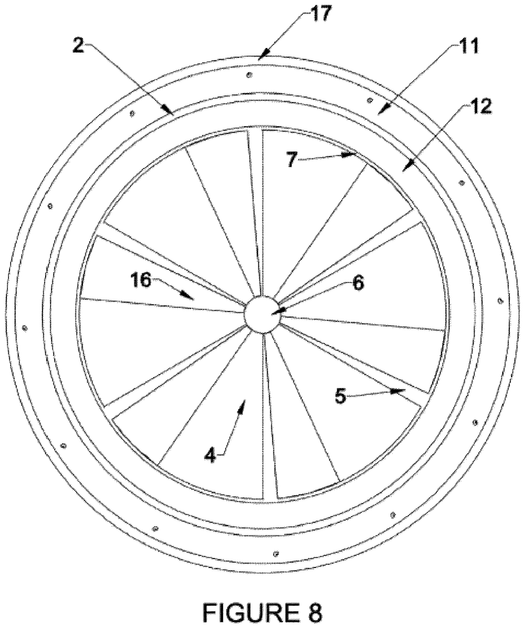

    Figure 8.- bottom view of the cover with the holding ring.

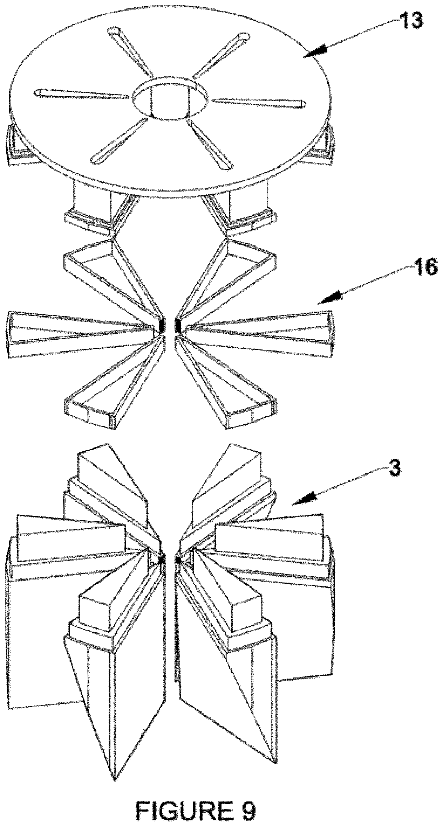

    Figure 9.- isometric view of the compressor, its sealing gaskets, the weight support, and the weight.

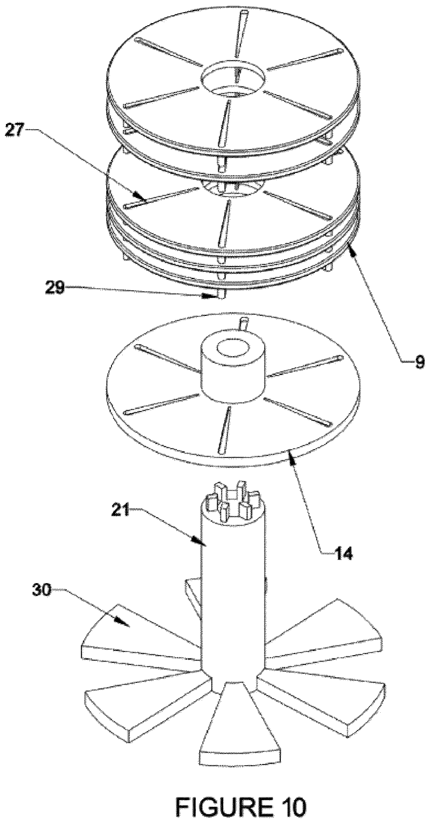

    Figure 10.- isometric view of the counterweight system.

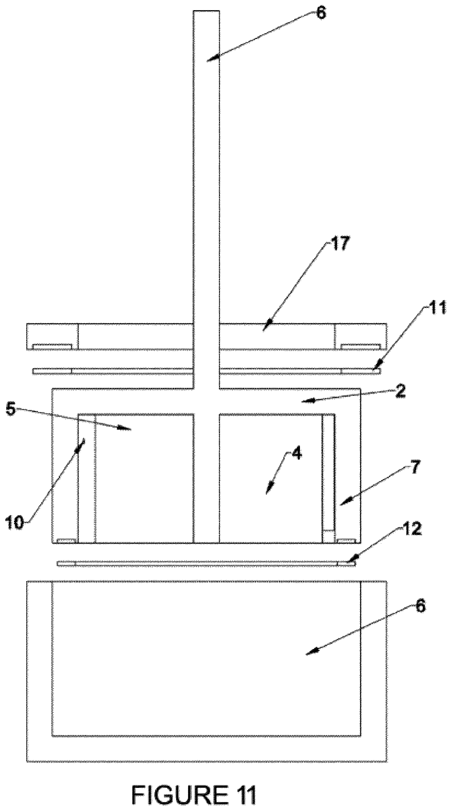

    Figure 11.- front sectional view of the cover and tank.

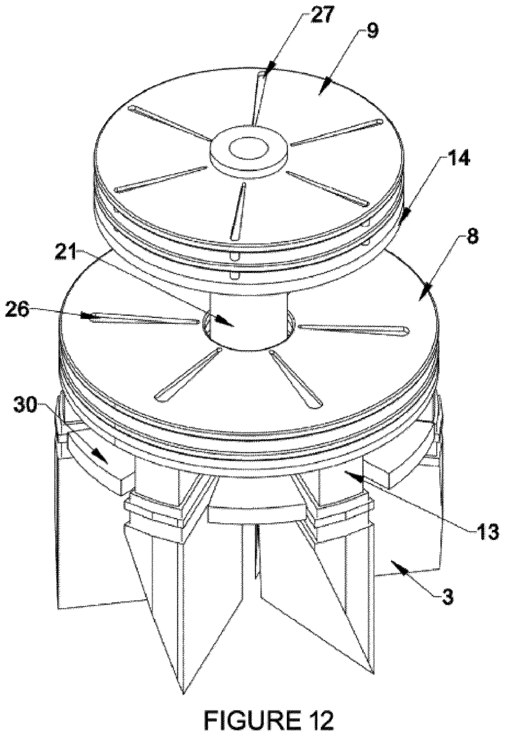

    Figure 12.- isometric view of the fluid compression system and the counterweight system.

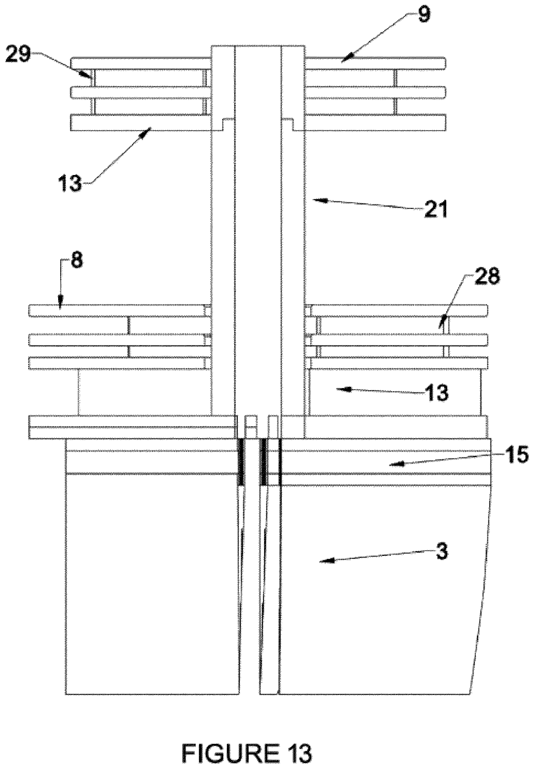

    Figure 13.- front sectional view of the counterweight and compression system.

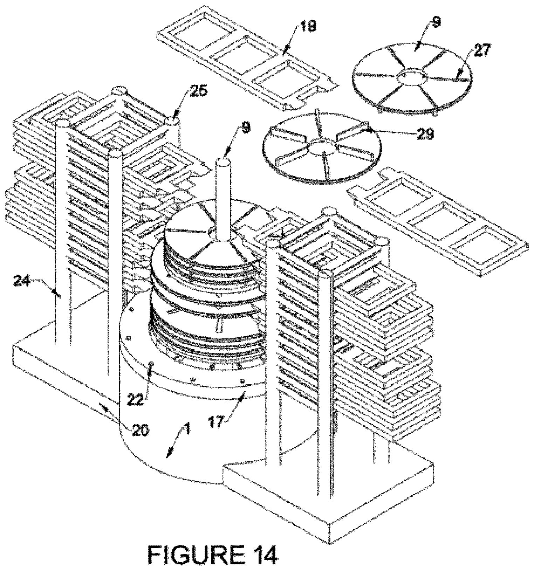

    Figure 14.- isometric view of the generator with disassembled parts.

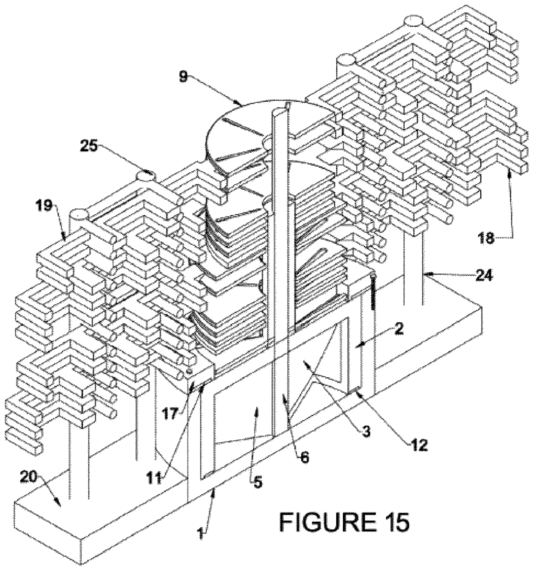

    Figure 15.-isometric sectional view of the generator.

## PREFERRED EMBODIMENT OF THE INVENTION

In the preferred embodiment thereof, the pressure-based dynamic generator will be made with a tank (1) the inner face of which is straight and flat, and the side inner faces of which are cylindrical. Only an upper ring or holding ring (17) surrounding the cover is removable, therefore these surfaces must be flat, favoring its constructive simplicity. The cylindrical inner part of the movable cover (2) will be kept solid, in the part that coincides with the shaft (6), with this shaft (6) being prolonged from the contact with the tank (2) to the outer outlet thereof, with the rotation element that can be coupled above the counterweight (9). The sealed chambers (4) will be cavities in the cover (2) itself, separated from one another by the ribs (5), and will be solid in its outer part, since it will have a solid cylindrical element (7) in the outermost contact with the tank (1), according to the spoke, such that contact is generated in the horizontal parts with the tank (1), both in its upper and lower parts, as well as in the outer part. The upper ring (17) of the tank (1), which is removable and will have a geometry that coincides with the solid element (7) of the cover (2), will be arranged on the solid outer element (7) of the mobile cover (2). For retaining the cover (2) in the horizontal plane.

The fill conduits (10) of the chambers (4) are holes arranged in the solid element (7) of the cover (2) to introduce liquid into the chambers without disassembling the system and will be covered with a specific threaded screw (23) to maintain sealing, on which the holding ring (17) will exert a clamping force since it is located on the closing screw (23) of the fill conduit. The sealing system will be made internally with a sealing gasket (12) for sealing the fluid with respect to the outside that will be made such that it is internally embedded in the cover (2) itself, elaborated with adaptable ring-shaped rubber and contained in the cover (2) itself. The sealing system for sealing the fluid with respect to the outside will be made in the solid part of the cover (2), elaborated with adaptable rubber, in the horizontal part of the solid element. A rubber gasket will be placed on the flat lower part (12) of the solid element of the cover by way of a belt, alternating the metal and rubber contacts, and a flat gasket will also be placed between the cover and the ring (11) with a ring shape, right below the holding ring (17) of the cover.

In the cover (2), the groove (16) is elaborated in the form of a circular sector, leaving the inner faces of the groove (16) in contact with the compressor (3) vertically. The compressor (3) is a movable part that fits into the groove (16) of the cover (2), in its lower part the part tapers off as it moves down, such that each point coincides with the spoke of the cylinder that adapts to the development of the rotation shaft. This decreasing cross section goes from zero at its lowest point, increasing to its widest point where it coincides with the width of the base groove (16). When reaching this height, the width of the groove (16) is maintained throughout the entire thickness thereof. A band corresponding to the rubber sealing gasket (15) is found in this thickness. It separates two bands of the metal of the compressor (3) itself from one another.

The width of the compressor (3) will be prolonged until overcoming the counterweight support (30), above this height, it joins forming a single part with the weight support (13), this support (13) will be a flat plate with the flat upper part except for the weight coupling notches (26). The weights (8) have coupling flanges (28) on the lower part thereof fitting in the upper part thereof with the coupling notches (26), these will be longitudinal in the direction of the spokes of the cylinder of development about the shaft (6). The weight support (8) will be in the form of a washer with the flat upper part except for the coupling notches (26) for coupling the weights to one another.

The counterweight system (9) rests directly on the cover (2), avoiding the area of the groove (16) and the rib of the cover (5), therefore the counterweight lower part or support (30) is flatly supported with the cover. These feet or supports (30) are attached to the annular-shaped rod (21) and is arranged inside the weight support (13) and the weight (8) itself, without causing friction, until it overcomes them and joins the counterweight support (14). The counterweight rod (21) is hollow and the shaft (6) of the cover (2) moves through same. The shaft (6) of the cover (2) is integral therewith, vertical, and passes through the weight (8), its support system (13), as well as the counterweight (9), without brushing against any of them.

The weights (8) are placed on the support (13) by an external hydraulic loading and unloading mechanism. The weights (8) which do not rest directly on the support (13) are held aloft without transmitting the weight (8) to the compressor (3) held by weight guides (18), keeping them in their position of not exerting pressure on the liquid. When a weight is released, an external loading and unloading system helps it to move down to its working position where it rests on the lower weights that are working on the weight support (13), at that point the weights are coupled to one another by means of the coupling notches (26) of the weight which are radial cavities of the weights which, by having a flat cylindrical shape, require these coupling notches (26) so as to rest on one another. By having in its lower part projections (28) in the direction of the spoke of the shaft which fit into the upper notches (26) of the other ones, they prevent the movement of some weights (8) on the others with the movement. Having several coupleable weights (8) means that the system can work in various pressure conditions.

The weights (8) have a hollow interior due to their annular shape, since the counterweight rod (21) and the actual shaft (6) of the cover (2) pass through them. The weights (8) which do not exert pressure on the fluid must be supported by an external system formed by a foot (20) that holds posts (24) which are joined together and on which guides (19) holding the weight (8) are mounted, transmitting it as pressure to the supporting posts (24). This structure retains the weight until each of the through washers is released on the lateral compressor (3).

The counterweight (9) has a support and loading mechanism similar to that of the weight (8).

The counterweight (9) is held in its holding guides (19) while they are not needed, transmitting its weight to the counterweight holding posts (25). These posts (25) are in this arrangement above the weight posts (24) and rest thereon. When required, the system can release the counterweight holding guides (19) which allow the counterweight rings (9) to fall onto the system. These ring-shaped counterweights (9) are flat and cylindrical with an annular shape, allowing the shaft to go through same without any hindrance. The counterweight (9) consists of coupleable flanges and notches to prevent the counterweights (9) from sliding with respect to one another.

## Claims

1. A device which transforms a vertical weight into pressure on a liquid contained such that it is sealed between a fixed part or static tank (1) and a movable part or movable cover (2), whereby the pressure is transmitted using a lateral compressor (3) entering each of a plurality of liquid-filled, sealed chambers (4) into which a pressurized liquid-filled space with 360 degrees of revolution about a main shaft (6) is divided and whereby a coupling between the static tank (1) and the movable cover (2) is a complete surface of revolution about the main shaft (6), the chambers (4) are hollow spaces taking up the entire hollow space between the cover (2) and the tank, and vertical ribs of the cover (5) which separate the chambers (4) of the cover from one another demarcate the chambers vertically, and against which the lateral compressor (3) slides vertically on the face thereof opposite the direction of advancement, such that the lateral compressor rests solely and exclusively on the pressurized liquid (7) transmitting thereto the entire weight it receives by means of an inclined surface of revolution, having zero width at the lower point thereof and a width equal to the width of a groove (16) in the upper part of the respective chamber (4), generating an unbalanced pressure on the face of the rib of the cover (2) opposite the advancement of the movable cover (2), whereby the unbalanced pressure generates an angular movement of an assembly consisting of the movable cover (2), the lateral compressor (3), weights (8), counterweights (9) and the main shaft, thereby generating a drive torque in the main shaft (6).

2. The device according to claim 1, whereby the fixed part or static tank (1), together with the movable cover (2), is part of the casing of the sealed chambers (4) where the pressurized liquid is arranged and whereby the liquid transmits its pressure to the tank and, given that it is a static component, it gives rise to a reaction which promotes the movement of the liquid in the chamber when it contacts the tank, whereby the part in contact with the cover is a surface of revolution about the main shaft (6), allowing the fixed part and the movable part to rotate 360 degrees with respect to one another, keeping the chambers (4) sealed and the fluid under pressure and whereby the static tank (1) prevents the movable cover from moving in undesired directions, mainly downwards, and containing centrifugal pressure forces

3. The device according to claim 1, whereby the movable part moves on the fixed part or tank (1) due to the unbalanced pressure horizontally on the ribs of the cover (5) in the direction of rotation about the main shaft and whereby the ribs receive a force from the liquid on one of the faces in the direction of advancement, and, meanwhile on the face opposite the advancement, this force does not exist, and therefore the sum of forces on the walls of the rib (5) result in an unbalanced net force in the direction of angular advancement causing the cover to rotate, whereby the movable cover (2) is the part in contact with the static tank (1) and there is supported thereon a counterweight transmitter support (14) to compensate for the vertical force caused by the upwards pressure in the sealed chambers (4), keeping the cover horizontal.

4. The device according to claim 3, whereby the counterweights (9), the counterweight transmitter support (14), a counterweight rod (21), and a support on the cover (30), exert a downward vertical force due to the support of the counterweights (9), whereby they unload this force on the movable cover to counteract the upward vertical force caused by the pressure of the liquid in the sealed chambers (4), therefore preventing excessive friction and keeping the movable system horizontal, thereby facilitating the rotation of the cover (2) about the main shaft (6).

5. The device according to claim 1, further comprising a compression system for compressing the liquid inside the sealed chamber (4), whereby pressure will be generated on the liquid as a result of the lateral compressor (3) which rests solely and exclusively on the liquid, and, in turn, resting thereon is the weight (8) which, according to rotational needs, is deposited above a weight transmitter support (13), and this in turn rests on the lateral compressor (3) whereby this system of parts is integral with one another and rests on one another, respectively, and when the cover (2) rotates about the main shaft (6), the system also rotates therewith, because it drives same during the rotation thereof without any impediment.

6. The device according to claim 5, **characterized by** the transmission of pressure to the liquid by the lateral compressor (3), that transmits the support of the vertical weight (8) on the liquid, according to the surface of contact with the liquid, and it is inclined such that the resulting component of the pressure transmitted to the liquid, compresses the liquid in the direction of advancement of the movable part, whereby the part opposite the advancement of the compressor (3) is straight and vertical, like the face of the rib (5) against which it slides vertically, and in full contact not transmitting pressure to the liquid through the vertical face, so, in the area of the rib (5) in contact with the lateral compressor (3), there is no force acting on that face of the rib (5) in the direction perpendicular to the faces since the liquid does not enter that point, meanwhile, on the opposite face of the rib (5) there is a force caused by the pressure of the liquid in the direction of advancement, since both faces of the rib (5) are equal in surface, the force in the direction of rotation is distinctly higher.

7. The device according to claim 5, wherein the lateral compressor (3) enters through the movable cover (2) without any hindrance whatsoever, through the admission grooves (16) of the cover (2) to apply pressure on the fluid, such that the sealing gaskets of the compressor (15) prevent the pressurized fluid inside the sealed chambers from leaking out, whereby each admission groove (16) and the part of the lateral compressor (3) where the sealing gasket of the compressor (15) is housed have the same base geometry and fit together perfectly.

8. The device according to claim 1, whereby the main shaft (6) is integral with the movable cover and in turn is serving as a shaft of revolution, and whereby the main shaft (6) serves to transmit the rotation generated in the movable part, causing a drive torque and the rotation of any device coupled thereto and whereby in the rotational movement thereof, no part which prevents the movement thereof is interposed in order to transmit the highest possible torque.

9. The device according to claim 5, further comprising a mechanism for controlling, loading, and unloading the weight (8) with respect to the weight transmitter support (13), where it is transmitted to the lateral compressor (3) through the grooves (16) of the cover (2) and from there to the liquid.

10. The device according to claim 4, further comprising of a mechanism for controlling, loading, and unloading the counterweight (9) with respect to the device, through the counterweight transmitter support (14), the counterweight rod (21), and the counterweight support (30) on the movable cover, keeping it horizontal and preventing excessive frictions during movement.

11. The device according to claim 1, further comprising a fill conduit (10) for filling the sealed chamber (4) with liquid with minimal disassembly of parts and with the smallest amount of leaked liquid.

12. The device according to claim 1, further comprising sealing gaskets (12) between the movable part or cover (2) and the static part or tank, preventing the liquid contained between these two parts from losing pressure, and therefore the movement of the cover (2) can be generated.

13. The device according to claim 1, further comprising sealing gaskets (15) between the cover (2) and the lateral compressor (3), preventing the pressurized liquid inside the sealed chamber (4) from leaking out between the cover and the weight transmitter system (8).

14. The device according to claim 4, wherein the counterweight support (30) on the cover (2) is supported on the areas between the grooves (16) of the cover (2) where the lateral compressor (3) is fitted, such that a support is made on the part of the cover (2) where the liquid of the chambers (4) exerts a vertical upward force.

**Patentansprüche**

1. Eine Vorrichtung, die ein vertikales Gewicht in Druck auf eine Flüssigkeit umwandelt, die so enthalten ist, dass sie zwischen einem festen Teil oder statischen Tank (1) und einem beweglichen Teil oder einer beweglichen Abdeckung (2) abgedichtet ist, wobei der Druck mithilfe eines seitlichen Kompressors (3) übertragen wird, der in jede einer Vielzahl von flüssigkeitsgefüllten, abgedichteten Kammern (4) eintritt, in die ein unter Druck stehender, flüssigkeitsgefüllter Raum mit einer Rotation von 360 Grad um eine Hauptwelle (6) unterteilt ist, und wobei eine Kupplung zwischen dem statischen Tank (1) und der beweglichen Abdeckung (2) eine vollständige Rotationsfläche um die Hauptwelle (6) ist, wobei die Kammern (4) Hohlräume sind, die den gesamten Hohlraum zwischen der Abdeckung (2) und dem Tank einnehmen, und vertikale Rippen der Abdeckung (5), die die Kammern (4) der Abdeckung voneinander trennen, die Kammern vertikal abgrenzen und gegen die der seitliche Kompressor (3) vertikal auf der der Vorschubrichtung entgegengesetzten Fläche gleitet, so dass der seitliche Kompressor ausschließlich und ausschließlich auf der unter Druck stehenden Flüssigkeit (7) ruht und das gesamte Gewicht, das er empfängt, darauf überträgt, mittels eines geneigte Rotationsfläche, die an ihrem unteren Punkt eine Breite von Null und eine Breite gleich der Breite einer Nut (16) im oberen Teil der jeweiligen Kammer (4) aufweist, wodurch ein unausgeglichener Druck auf der Fläche der Rippe der Abdeckung (2) gegenüber der Vorwärtsbewegung der beweglichen Abdeckung (2) erzeugt wird, wobei der unausgeglichene Druck eine Winkelbewegung einer Baugruppe erzeugt, die aus der beweglichen Abdeckung (2), dem seitlichen Kompressor (3), Gewichten (8), Gegengewichten (9) und der Hauptwelle besteht, wodurch ein Antriebsdrehmoment in der Hauptwelle (6) erzeugt wird.

2. Vorrichtung nach Anspruch 1, wobei der feste Teil oder statische Behälter (1) zusammen mit der beweglichen Abdeckung (2) Teil des Gehäuses der abgedichteten Kammern (4) ist, in denen die unter Druck stehende Flüssigkeit angeordnet ist, und wobei die Flüssigkeit ihren Druck auf den Behälter überträgt und, da es sich um eine statische Komponente handelt, eine Reaktion hervorruft, die die Bewegung der Flüssigkeit in der Kammer fördert, wenn sie den Behälter berührt, wobei der mit der Abdeckung in Kontakt stehende Teil eine Rotationsfläche um die Hauptwelle (6) ist, die es dem festen Teil und dem beweglichen Teil ermöglicht, sich um 360 Grad relativ zueinander zu drehen, wodurch die Kammern (4) abgedichtet und die Flüssigkeit unter Druck gehalten werden, und wobei der statische Behälter (1) verhindert, dass sich die bewegliche Abdeckung in unerwünschte Richtungen, hauptsächlich nach unten, bewegt, und Zentrifugaldruckkräfte enthält.

3. Vorrichtung nach Anspruch 1, wobei sich der bewegliche Teil aufgrund des unausgeglichenen horizontalen Drucks auf den Rippen der Abdeckung (5) in Drehrichtung um die Hauptwelle auf dem festen Teil oder Tank (1) bewegt und wobei die Rippen auf einer der Flächen in Vorschubrichtung eine Kraft von der Flüssigkeit aufnehmen, während auf der der Vorschubrichtung entgegengesetzten Fläche diese Kraft nicht vorhanden ist, und daher die Summe der Kräfte auf den Wänden der Rippe (5) eine unausgeglichene Nettokraft in Richtung des Winkelvorschubs ergibt, die eine Drehung der Abdeckung bewirkt, wobei die bewegliche Abdeckung (2) der Teil ist, der mit dem statischen Tank (1) in Kontakt steht, und darauf eine Gegengewichtstransmitterhalterung (14) gelagert ist, um die vertikale Kraft auszugleichen, die durch den Aufwärtsdruck in den abgedichteten Kammern (4) verursacht wird, wodurch die Abdeckung horizontal gehalten wird.

4. Vorrichtung nach Anspruch 3, wobei die Gegengewichte (9), die Gegengewichtsgeberhalterung (14), eine Gegengewichtsstange (21) und eine Halterung an der Abdeckung (30) aufgrund der Unterstützung der Gegengewichte (9) eine nach unten gerichtete vertikale Kraft ausüben, wobei sie diese Kraft auf die bewegliche Abdeckung entladen, um der nach oben gerichteten vertikalen Kraft entgegenzuwirken, die durch den Druck der Flüssigkeit in den abgedichteten Kammern (4) verursacht wird, wodurch übermäßige Reibung verhindert und das bewegliche System horizontal gehalten wird, wodurch die Drehung der Abdeckung (2) um die Hauptwelle (6) erleichtert wird.

5. Vorrichtung nach Anspruch 1, die außerdem ein Kompressionssystem zum Komprimieren der Flüssigkeit innerhalb der abgedichteten Kammer (4) umfasst, wobei Druck auf die Flüssigkeit aufgrund des seitlichen Kompressors (3) erzeugt wird, der einzig und allein auf der Flüssigkeit ruht, und auf dem wiederum das Gewicht (8) ruht, das je nach Rotationsbedarf über einer Gewichtstransmitterhalterung (13) abgelegt wird, und diese wiederum ruht auf dem seitlichen Kompressor (3), wobei dieses System von Teilen miteinander verbunden ist bzw. aufeinander ruht, und wenn sich die Abdeckung (2) um die Hauptwelle (6) dreht, dreht sich das System ebenfalls mit, da es diese während der Drehung ohne jegliche Behinderung antreibt.

6. Vorrichtung nach Anspruch 5, **gekennzeichnet durch** die Druckübertragung auf die Flüssigkeit durch den seitlichen Kompressor (3), der die Unterstützung des vertikalen Gewichts (8) auf die Flüssigkeit überträgt, je nach der Kontaktfläche mit der Flüssigkeit, und der so geneigt ist, dass die resultierende Komponente des auf die Flüssigkeit übertragenen Drucks die Flüssigkeit in Vorschubrichtung des beweglichen Teils komprimiert, wobei der der Vorschubrichtung des Kompressors (3) gegenüberliegende Teil gerade und vertikal ist, wie die Fläche der Rippe (5), an der er vertikal gleitet, und bei vollem Kontakt keinen Druck auf die Flüssigkeit durch die vertikale Fläche überträgt, so dass im Bereich der Rippe (5), die mit dem seitlichen Kompressor (3) in Kontakt ist, keine Kraft auf diese Fläche der Rippe (5) in senkrechter Richtung zu den Flächen wirkt, da die Flüssigkeit an diesem Punkt nicht eindringt, während auf der gegenüberliegenden Fläche der Rippe (5) eine durch den Druck der Flüssigkeit verursachte Kraft in Vorschubrichtung wirkt, da beide Flächen der Rippe (5) die gleiche Oberfläche haben, ist die Kraft in Drehrichtung deutlich höher.

7. Vorrichtung nach Anspruch 5, wobei der seitliche Kompressor (3) ungehindert durch die Einlassnuten (16) der Abdeckung (2) in die bewegliche Abdeckung (2) eintritt, um Druck auf die Flüssigkeit auszuüben, so dass die Dichtungen des Kompressors (15) verhindern, dass die unter Druck stehende Flüssigkeit in den abgedichteten Kammern austritt, wobei jede Einlassnut (16) und der Teil des seitlichen Kompressors (3), in dem die Dichtung des Kompressors (15) untergebracht ist, die gleiche Grundgeometrie aufweisen und perfekt zusammenpassen.

8. Vorrichtung nach Anspruch 1, wobei die Hauptwelle (6) mit der beweglichen Abdeckung fest verbunden ist und wiederum als Drehwelle dient, und wobei die Hauptwelle (6) dazu dient, die im beweglichen Teil erzeugte Drehung zu übertragen, wodurch ein Antriebsdrehmoment und die Drehung eines damit verbundenen Geräts verursacht werden, und wobei in der Drehbewegung kein Teil dazwischengeschaltet ist, das die Bewegung verhindert, um das größtmögliche Drehmoment zu übertragen.

9. Vorrichtung nach Anspruch , die außerdem einen Mechanismus zum Steuern, Laden und Entladen des Gewichts (8) in Bezug auf die Gewichtsübertragungshalterung (13) umfasst, wo es durch die Rillen (16) der Abdeckung (2) auf den seitlichen Kompressor (3) und von dort auf die Flüssigkeit übertragen wird.

10. Vorrichtung nach Anspruch 4, die außerdem einen Mechanismus zum Steuern, Laden und Entladen des Gegengewichts (9) in Bezug auf die Vorrichtung umfasst, durch die Gegengewichtsübertragungshalterung (14), die Gegengewichtsstange (21) und die Gegengewichtshalterung (30) auf der beweglichen Abdeckung, wodurch es horizontal gehalten und übermäßige Reibung während der Bewegung verhindert wird.

11. Vorrichtung nach Anspruch 1, die außerdem eine Füllleitung (10) zum Füllen der abgedichteten Kammer (4) mit Flüssigkeit mit minimaler Demontage von Teilen und mit der geringsten Menge an ausgetretener Flüssigkeit umfasst.

12. Vorrichtung nach Anspruch 1, die außerdem Dichtungen (12) zwischen dem beweglichen Teil oder Deckel (2) und dem statischen Teil oder Behälter umfasst, die verhindern, dass die zwischen diesen beiden Teilen enthaltene Flüssigkeit an Druck verliert und daher die Bewegung des Deckels (2) erzeugt werden kann.

13. Vorrichtung nach Anspruch 1, die außerdem Dichtungen (15) zwischen Deckel (2) und seitlichem Kompressor (3) umfasst, die verhindern, dass die unter Druck stehende Flüssigkeit innerhalb der abgedichteten Kammer (4) zwischen Deckel und Gewichtsübertragungssystem (8) austritt.

14. Vorrichtung nach Anspruch 4, wobei die Gegengewichtsstütze (30) am Deckel (2) auf den Bereichen zwischen den Nuten (16) des Deckels (2) aufliegt, wo der seitliche Kompressor (3) angebracht ist, so dass eine Stütze auf dem Teil des Deckels (2) erfolgt, wo die Flüssigkeit der Kammern (4) eine vertikale Aufwärtskraft ausübt.

## Revendications

1. Dispositif qui transforme un poids vertical en pression sur un liquide contenu de manière étanche entre une partie fixe ou réservoir statique (1) et une partie mobile ou couvercle mobile (2), la pression étant transmise à l'aide d'un compresseur latéral. (3) entrer dans chacune d'une pluralité de chambres étanches remplies de liquide (4) dans lesquelles un espace rempli de liquide sous pression avec 360 degrés de révolution autour d'un arbre principal (6) est divisé et par lequel un couplage entre le réservoir statique (1 ) et le couvercle mobile (2) présente une surface de révolution complète autour de l'arbre principal (6), les chambres (4) sont des espaces creux occupant tout l'espace creux entre le couvercle (2) et la cuve, et des nervures verticales de le couvercle (5) qui sépare les chambres (4) du couvercle les unes des autres délimite verticalement les chambres, et contre lequel le compresseur latéral (3) glisse verticalement sur sa face opposée au sens d'avancement, de telle sorte que le compresseur latéral repose uniquement et exclusivement sur le liquide sous pression (7) lui transmettant tout le poids qu'il reçoit au moyen d'une surface inclinée de révolution, ayant une largeur nulle en son point inférieur et une largeur égale à la largeur d'une rainure (16) en son point supérieur partie de la chambre respective (4), générant une pression déséquilibrée sur la face de la nervure du couvercle (2) opposée à l'avancement du couvercle mobile (2), grâce à quoi la pression déséquilibrée génère un mouvement angulaire d'un ensemble constitué du le couvercle mobile (2), le compresseur latéral (3), les poids (8), les contrepoids (9) et l'arbre principal, générant ainsi un couple d'entraînement dans l'arbre principal (6).

2. Dispositif selon la revendication 1, dans lequel la partie fixe ou réservoir statique (1), avec le couvercle mobile (2), fait partie du boîtier des chambres étanches (4) où est disposé le liquide sous pression et dans lequel le le liquide transmet sa pression au réservoir et, étant donné qu'il s'agit d'un composant statique, il provoque une réaction qui favorise le mouvement du liquide dans la chambre lorsqu'il entre en contact avec le réservoir, la partie en contact avec le couvercle étant une surface de révolution autour de l'arbre principal (6), permettant à la partie fixe et à la partie mobile de tourner de 360 degrés l'une par rapport à l'autre, gardant les chambres (4) étanches et le fluide sous pression et grâce à quoi le réservoir statique (1) empêche le le couvercle mobile ne se déplace pas dans des directions indésirables, principalement vers le bas, et ne contient pas de forces de pression centrifuges.

**3.** Dispositif selon la revendication 1, **caractérisé en ce que** la partie mobile se déplace sur la partie fixe ou réservoir (1) du fait du déséquilibre de pression horizontalement sur les nervures du couvercle (5) dans le sens de rotation autour de l'arbre principal et grâce à quoi le les nervures reçoivent une force du liquide sur une des faces dans le sens de l'avancement, et, quant à elles, sur la face opposée à l'avancement, cette force n'existe pas, et donc la somme des forces sur les parois de la nervure (5) résulte dans une force nette déséquilibrée dans la direction d'avancement angulaire provoquant la rotation du couvercle, grâce à quoi le couvercle mobile (2) est la partie en contact avec le réservoir statique (1) et sur celui-ci repose un support émetteur de contrepoids (14) pour compenser pour la force verticale provoquée par la pression vers le haut dans les chambres étanches (4), en maintenant le couvercle horizontal.

**4.** Dispositif selon la revendication 3, dans lequel les contrepoids (9), le support émetteur de contrepoids (14), une tige de contrepoids (21), et un support sur le couvercle (30), exercent une force verticale vers le bas due au support des contrepoids (9), grâce à quoi ils déchargent cette force sur le couvercle mobile pour contrecarrer la force verticale ascendante provoquée par la pression du liquide dans les chambres étanches (4), empêchant ainsi un frottement excessif et maintenant le système mobile horizontal, facilitant ainsi la rotation du couvercle (2) autour de l'arbre principal (6).

**5.** Dispositif selon la revendication 1, comprenant en outre un système de compression pour comprimer le liquide à l'intérieur de la chambre étanche (4), grâce à quoi une pression sera générée sur le liquide grâce au compresseur latéral (3) qui repose uniquement et exclusivement sur le liquide, sur lequel repose à son tour le poids (8) qui, selon les besoins de rotation, est déposé au-dessus d'un support transmetteur de poids (13), et celui-ci repose à son tour sur le compresseur latéral (3) grâce à quoi ce système de Les pièces sont solidaires les unes des autres et reposent respectivement les unes sur les autres, et lorsque le couvercle (2) tourne autour de l'arbre principal (6), le système tourne également avec celui-ci, car il l'entraîne pendant sa rotation sans aucun obstacle.

**6.** Dispositif selon la revendication 5, **caractérisé par** la transmission de pression au liquide par le compresseur latéral (3), qui transmet l'appui du poids vertical (8) sur le liquide, en fonction de la surface de contact avec le liquide. , et il est incliné de telle sorte que la composante résultante de la pression transmise au liquide comprime le liquide dans le sens d'avancement de la partie mobile, la partie opposée à l'avancement du compresseur (3) étant droite et verticale, comme le face de la nervure (5) contre laquelle elle glisse verticalement, et en plein contact ne transmettant pas de pression au liquide à travers la face verticale, de sorte que, dans la zone de la nervure (5) en contact avec le compresseur latéral (3), il y a aucune force n'agit sur cette face de la nervure (5) dans la direction perpendiculaire aux faces puisque le liquide n'entre pas dans ce point, tandis que sur la face opposée de la nervure (5) il y a une force provoquée par la pression de le liquide dans le sens d'avancement, étant donné que les deux faces de la nervure (5) ont une surface égale, la force dans le sens de rotation est nettement plus élevée.

**7.** Dispositif selon la revendication 5, dans lequel le compresseur latéral (3) pénètre sans aucune entrave, à travers le couvercle mobile (2), par les rainures d'admission (16) du couvercle (2) pour appliquer une pression sur le fluide, tel les joints d'étanchéité du compresseur (15) empêchent le fluide sous pression à l'intérieur des chambres étanches de s'échapper, de sorte que chaque rainure d'admission (16) et la partie du compresseur latéral (3) où se trouve le joint d'étanchéité du compresseur (15) logés ont la même géométrie de base et s'emboîtent parfaitement.

**8.** Dispositif selon la revendication 1, dans lequel l'arbre principal (6) est solidaire du couvercle mobile et sert à son tour d'arbre de révolution, et dans lequel l'arbre principal (6) sert à transmettre la rotation générée dans le couvercle mobile. pièce, provoquant un couple d'entraînement et la rotation de tout dispositif couplé à celui-ci et grâce à quoi dans son mouvement de rotation, aucune pièce qui empêche son mouvement n'est interposée afin de transmettre le couple le plus élevé possible.

**9.** Dispositif selon la revendication 1, comprenant en outre un mécanisme de contrôle, de chargement et de déchargement du poids (8) par rapport au support transmetteur de poids (13), où il est transmis au compresseur latéral (3) à travers les rainures ( 16) du couvercle (2) et de là vers le liquide.

**10.** Dispositif selon la revendication 4, comprenant en outre un mécanisme de contrôle, de chargement et de déchargement du contrepoids (9) par rapport au dispositif, à travers le support émetteur de contrepoids (14), la tige de contrepoids (21) et le contrepoids, support (30) sur le couvercle mobile, le maintenant horizontal et évitant les frottements excessifs pendant le mouvement.

**11.** Dispositif selon la revendication 1, comprenant en outre un conduit de remplissage (10) pour remplir la chambre étanche (4) avec du liquide avec un démontage minimal des pièces et avec la plus petite quantité de liquide qui fuit.

12. Dispositif selon la revendication 1, comprenant en outre des joints d'étanchéité (12) entre la partie mobile ou couvercle (2) et la partie statique ou réservoir, empêchant le liquide contenu entre ces deux parties de perdre de la pression, et donc le mouvement du le couvercle (2) peut être généré.

13. Dispositif selon l'une des revendications précédentes, comprenant en outre des joints d'étanchéité (15) entre le couvercle (2) et le compresseur latéral (3), empêchant le liquide sous pression à l'intérieur de la chambre étanche (4) de s'échapper entre le couvercle et la masselotte. système émetteur (8).

14. Dispositif selon la revendication 4, dans lequel le support de contrepoids (30) du couvercle (2) prend appui sur les zones situées entre les rainures (16) du couvercle (2) où est monté le compresseur latéral (3), tel qu'un appui est réalisé sur la partie du couvercle (2) où le liquide des chambres (4) exerce une force verticale vers le haut.

FIGURE 1

FIGURE 2

FIGURE 3

FIGURE 4

FIGURE 5

FIGURE 6

FIGURE 7

FIGURE 8

13

16

3

FIGURE 9

FIGURE 10

FIGURE 11

FIGURE 12

FIGURE 13

FIGURE 14

FIGURE 15

**REFERENCES CITED IN THE DESCRIPTION**

**Patent documents cited in the description**

• GB 320313 A